# EUROPÄISCHE PATENTSCHRIFT

(11) **EP 0 679 326 B1**
(45) Veröffentlichungstag und Bekanntmachung des Hinweises auf die Patenterteilung: **29.03.2000**
(21) Anmeldenummer: 95105897.3
(22) Anmeldetag: 20.04.1995
(51) Int. Cl.: A01B 59/042, A01C 15/00, A01M 7/00

(54) **Sich auf Laufrädern auf dem Boden abstützende Einheit**
Wheeled carrier
Chariot trainé avec roues porteurs

(30) Priorität: 29.04.1994 US 236711
(43) Veröffentlichungstag der Anmeldung: 02.11.1995
(73) Patentinhaber: DEERE & COMPANY, Moline, Illinois 61265-8098 (US)
(72) Erfinder: Green, Lawrence David, Bettendorf, Iowa 52722 (US); Pratt, Ronald Lee, Taylor Ridge, Illinois 61284 (US)
(74) Vertreter: Feldmann, Bernhard

(56) Entgegenhaltungen:
- CA-A- 1 104 427
- DE-C- 326 743
- GB-A- 824 566
- US-A- 2 139 212
- US-A- 3 900 201
- US-A- 4 579 361

## Beschreibung

Die Erfindung bezieht sich auf eine sich auf Pendelrädem auf dem Boden abstützende Einheit mit einem Rahmen, der über eine Zentralkupplung und eine erste und eine zweite Zugstange an einen Querträger anschließbar ist, wobei die erste und die zweite Zugstange sich für eine Verbindung mit dem Querträger nach vorne erstrecken und an den Rahmen angelenkt sind.

Die Arbeitsbreiten von Sämaschinen oder von Einzelkornsämaschinen werden immer größer. Derartige Maschinen werden in der Regel von einem Traktor über das Feld gezogen und während des Einsatzes bei Bedarf mit Saatgut befüllt. Dieses Saatgut wird einem Zentralbehälter auf einem Transportwagen pneumatisch entnommen. Der Transportwagen wird ebenfalls von dem Traktor gezogen und kann noch mit Behältern für die Austragung von Düngemitteln versehen sein. Sowohl die Sämaschine als auch der Transportwagen bringen ein beträchtliches Gewicht auf den Boden. Der Transportwagen und die Sämaschine sind so miteinander zu verbinden, daß insbesondere bei Arbeiten auf unebenem Gelände kein seitliches Ausbrechen erfolgt. Die Räder sollten immer Bodenkontakt haben, und Verwindungen des Rahmens bzw. zu große Belastungen in den Anschlußgelenken sind zu vermeiden.

Eine bekannte Einheit (US-A-4 681 335) ist als ein sich auf nicht einschlagbaren Rädern abstützender Werkzeugträger zur Aufnahme von landwirtschaftlichen Geräten ausgebildet. Er ist an den Querträger eines Transportwagens für Saatgut anhängbar, der seinerseits über eine Anhängedeichsel an einen ziehenden Traktor angeschlossen ist. Im einzelnen ist der Werkzeugträger über eine zentrale Deichsel an den Transportwagen anhängbar. Von der Deichsel aus erstrecken sich noch zwei federbelastete Hydraulikzylinder zu dem Querträger des Transportwagens. Sie sollen zur Stabilisierung, insbesondere bei Transportfahrten dienen. Derartige Verbindungen sind natürlich äußerst aufwendig und auch störanfällig. In unebenem Gelände erfüllen sie darüberhinaus auch nicht die an sie zu stellenden Erfordernisse. Ein Rückwärtsfahren gestaltet sich sehr schwierig. Enges Kurvenfahren ist nicht möglich und damit Kurven überhaupt durchfahren werden können, ist jeder Zylinder an die Deichsel über eine Langlochverbindung angeschlossen.

Die eingangs genannte Einheit (DE-C-326 743) ist als Pflug dargestellt, der an eine Zugmaschine angehängt ist. Die Anhängung besteht im einzelnen aus außen liegenden Zugstangen, die einenends mit dem Pflugrahmen fest verschraubt sind. Anderenends tragen die Zugstangen Rollen, die in Segmentführungen von Auslegern geführt sind. Die Ausleger wiederum sind am Fahrgestellrahmen der Zugmaschine befestigt. Über eine einstellbare Zentralkupplung in Form einer Zugspindel, die den Zug zwischen der Zugmaschine und dem Pflug aufnimmt, werden die Rollen in den Segmentführungen eingestellt. Durch diese Anhängung soll sich der Pflug oder ein anderes Ackergerät in der Fahrtrichtung und auch quer zu derselben den Bodenunebenheiten anpassen. Eine derartige Anhängung ist natürlich auch äußerst aufwendig. Sie ist nicht in der Lage, vertikale Lasten zu übertragen.

Die der Erfindung zugrundeliegende Aufgabe wird in einer einfachen Anschlussmöglichkeit des Rahmens an den Querträger gesehen, die die vorgenannten Nachteile zumindest teilweise vermeidet und sowohl bei Transportfahrten auf Straßen oder Wegen als auch bei Arbeiten auf dem Feld ein sicheres Führen des Gespanns gewährleistet. Die Erfindung sieht deshalb vor, daß die Zentralkupplung ein Gestänge aufweist, über das der Rahmen an den Querträger anschließbar ist, wobei sich die kraftangriffslinien der Zugstangen (25, 26) und des Gestänges (34) nicht in derselben Richtung erstrecken, so daß das Gestänge (34) zu keiner Zeit eine Strecklage einnehmen kann, eine Bewegung des Rahmens auf den Querträger zu und von diesem fort zulässt und aufgrund seiner Form und der Zuordnung der Zentralkupplung zu den beiden äußeren Zugstangen in der Lage ist, vertikale Lasten zu übertragen, nicht aber Zug- und Drucklasten.

Auf diese Weise werden über das Gestänge keine Zugkräfte oder Druckkräfte übertragen. Solche werden von den Zuglenkern übertragen, die den Rahmen zu dem Querträger mehr oder weniger parallel ausgerichtet halten. Insbesondere bei Kurvenfahrten führt das Gestänge bzw. die Zentralkupplung die Relativbewegungen aus. Das Verbindungsglied erzeugt eine "schwimmende Verbindung".

Im einzelnen kann das Gestänge vertikal schwenkbar und zwischen der ersten und zweiten Zugstange vorgesehen sein, wobei der Rahmen mittig oder etwa mittig zwischen den beiden Zugstangen mit einem nach vorne weisenden Tragteil versehen ist, an dem das Gestänge vertikal schwenkbar angeschlossen ist. Damit kann der Tragteil vertikale Lasten übertragen, insbesondere, wenn die Einheit als Transportwagen ausgebildet ist und wenn sich die Laufräder im Bereich des rückwärtigen Rahmenendes des Transportwagens befinden.

Seitliche Ausweichbewegungen werden möglich, wenn nach einem weiteren Vorschlag der Erfindung das Gestänge über ein Kugelgelenk an den Tragteil es Rahmens des Transportwagens anschließbar ist, wobei das Gestänge zweckmäßig umgekehrt Y-förmig mit einem nach oben weisenden Schaftteil, der über das Kugelgelenk an den Rahmen anschließbar ist, und mit zwei nach unten weisenden Schenkelteilen ausgebildet ist, die über mindestens einen Zapfen an den Querträge anschließbar sind. Vorgeschlagen wird ferner, daß die Zugstangen vertikal schwenkbar an dem Rahmen des Transportwagens angeschlossen und über je ein Kugelgelenk an den Querträger anschließbar sind.

Damit Bodenunebenheiten leichter gefolgt werden kann, sollte das Kugelgelenk am Gestänge und die Kugelgelenke der Zugstangen auf einer gemeinsamen quer zur Fahrtrichtung verlaufenden Schwenkachse angeordnet sein.

Die Erfindung läßt sich besonders erfolgreich an einem an einen Werkzeugträger für landwirtschaftliche Geräte angeschlossener Transportwagen mit einem Behälter für Gut realisieren, das über die landwirtschaftlichen Geräte austragbar ist. Der Werkzeugträger ist dabei als quer zur Fahrtrichtung verlaufender Balken ausgebildet. Er kann starr oder "flexibel" sein. Im letzteren Falle kann er aus einzelnen Segmenten bestehen, die bei Bodenunebenheiten zueinander relativ bewegbar sind. Er kann aber auch nur um eine in Fahrtrichtung verlaufende Achse schwenken. In jedem Fall nimmt der Werkzeugträger nebeneinander angeordnete Säeinheiten und/oder Pflegegeräte auf und ist mit dem ziehenden Traktor verbunden und stützt sich auf Laufrädern ab. Der Transportwagen läuft dann im Einsatz im wesentlichen parallel zu dem Werkzeugträger und hinter diesem. Lediglich die Zugstangen ziehen den Transportwagen, während die Zentralkupplung oder das "schwimmende" Verbindungsglied vertikale Gewichtsanteile überträgt. Ein seitliches Driften wird durch die Zentralkupplung aufgefangen, die zudem die Relativbewegung in Fahrtrichtung ermöglicht. Bei Arbeiten auf unebenem Gelände wird sich, wenn z. B. ein linkes Rad auf eine Bodenerhöhung trifft, das linke Werkzeugträgersegment anheben, während das rechte Werkzeugträgersegment seine Lage nicht oder nur unwesentlich ändert. Bei einer derartigen Situation wird die linke Seite des Transportwagens etwas nach vorne gezogen, da die "horizontale Länge" der linken Zugstange wesentlich verkürzt wird. Infolge der Schwimmverbindung kann die Zentralkupplung diesen Bewegungen folgen, ohne Schaden zu nehmen.

In der Zeichnung ist ein nachfolgend näher erläutertes Ausführungsbeispiel der Erfindung dargestellt. Es zeigt:

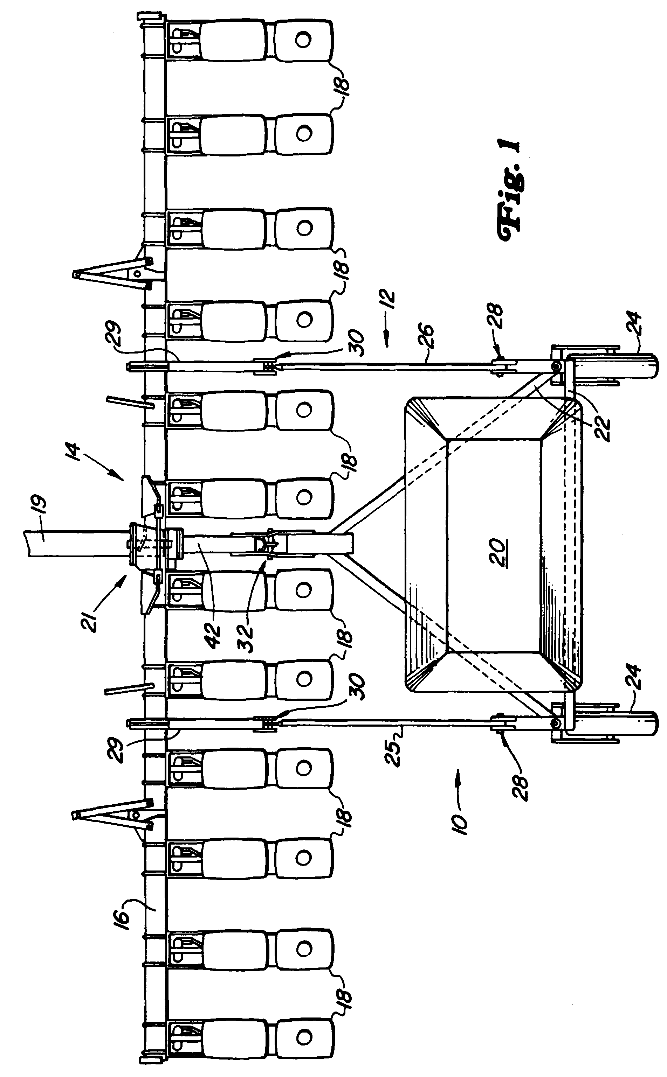

- Fig. 1: einen an einen Werkzeugträger angeschlossenen Transportwagen oder -karren in der Draufsicht,
- Fig. 2: das Gespann nach Fig. 1 in der Seitenansicht,
- Fig. 3: einen Schnitt nach der Linie 3 : 3 in Fig. 2 und
- Fig. 4: den Transportwagenrahmen in perspektivischer Ansicht, der über einen rechten und einen linken Zuglenker und über eine mittige Zentralkupplung an den Werkzeugträger angeschlossen ist.

Bei dem bevorzugten Ausführungsbeispiel ist ein einachsiger Transportwagen 10 an ein landwirtschaftliches Gerät 14 über eine Anhängevorrichtung 12 angeschlossen. Transportwagen und Gerät werden im Einsatz von einem in der Zeichnung nicht dargestellten Traktor über ein Feld gezogen. Das Gerät kann sich dabei auf eigenen Rädern abstützen oder an den Traktor angebaut sein. Gleichfalls kann der Transportwagen an den Traktor angeschlossen werden und das Gerät hinter sich herziehen. In jedem Fall ist die letzte Einheit auf der vor ihr angeordneten Einheit aufgesattelt, d. h. ein Teil des Gewichtes der letzten Einheit wird auf die vor ihr laufende Einheit übertragen oder die entstehenden Momente müssen aufgefangen werden. Ist der Transportwagen, der mit mindestens einem Behälter 20 für auf dem Feld auszubringendes Gut bestückt ist, die letzte Einheit, so ist der zu übertragende Gewichtsanteil beträchtlich, insbesondere, wenn der Transportwagen kopflastig ist. Ist das Gerät die letzte Einheit, so kann es, wenn es sich auf eigenen Rädern abstützt, heck- oder kopflastig sein.

Von besonderer Bedeutung ist allerdings, daß Vorkehrungen getroffen werden, damit die letzte Einheit, sei es der Transportwagen oder das Gerät, beim Einsatz nicht seitlich ausbricht. Alle Einheiten sollen im Einsatz stets in ihrer Spur bleiben, die auf dem Feld in der Regel zwischen Saat- oder Pflanzenreihen verläuft. Bei einem engen Reihenabstand würde bereits bei einem geringen Aus-der-Spur-Laufen die Saat oder die Pflanze beschädigt.

Bei dem vorliegenden Ausführungsbeispiel ist das Gerät 14 als Einzelkornsämaschine mit einem quer zur Arbeitsrichtung verlaufenden Werkzeugträger 16 ausgebildet, an dem eine Vielzahl von Reiheneinheiten 18 nebeneinander angeordnet ist. Der Werkzeugträger 16 ist über eine sich in Arbeitsrichtung erstreckende Deichsel 19 an den Traktor angeschlossen und stützt sich über Räder auf dem Boden ab. Der Werkzeugträger 16 kann sich den Bodenunebenheiten anpassen, wozu ein in Fahrtrichtung verlaufender Schwenkzapfen 21 vorgesehen ist, um den der Werkzeugträger 16 bei einem Auftreffen auf Bodenunebenheiten kippen kann. Außerdem ist der Werkzeugträger 16 für Transportfahrten nach vorne einklappbar, da derartige Einzelkornsämaschinen eine sehr große Arbeitsbreite haben. Obwohl die vorliegende Erfindung die Besonderheiten eines anpassungsfähigen Werkzeugträgers berücksichtigt, kann sie dennoch an anderen Geräten, wie Drillmaschinen, Düngerstreuer usw. mit Erfolg eingesetzt werden. Bei einem quer zur Arbeitsrichtung verlaufenden Werkzeugträger braucht dieser nicht unbedingt um eine in Arbeitsrichtung verlaufende Achse kippbar zu sein. Er kann auch starr mit der Zugdeichsel verbunden sein.

Der in der Zeichnung dargestellte Transportwagen ist mit einem die auf den Reiheneinheiten 18 angeordneten Einzel- oder Zweitbehälter bei Bedarf automatisch nachfüllenden und pneumatisch betriebenen Austragssystem für Saatgut ausgestattet, wie es in dem Dokument EP-A1-0 513 582, auf das hier deshalb ausdrücklich Bezug genommen wird, beschrieben ist. Zu diesem System gehört der Zentralbehälter 20, aus dem Saatgut zu den einzelnen Zweitbehältern der Reiheneinheiten 18 pneumatisch gefördert wird, sobald der Füllstand in dem entsprechenden Zweitbehälter einen vorgegebenen Wert unterschritten hat. Ein derartiges System kann aber auch bei pneumatischen Sämaschinen eingesetzt werden. Der Transportwagen kann auch noch Behälter für Düngemittel oder Pestizide aufweisen, oder nur mit derartigen Behältern bestückt sein.

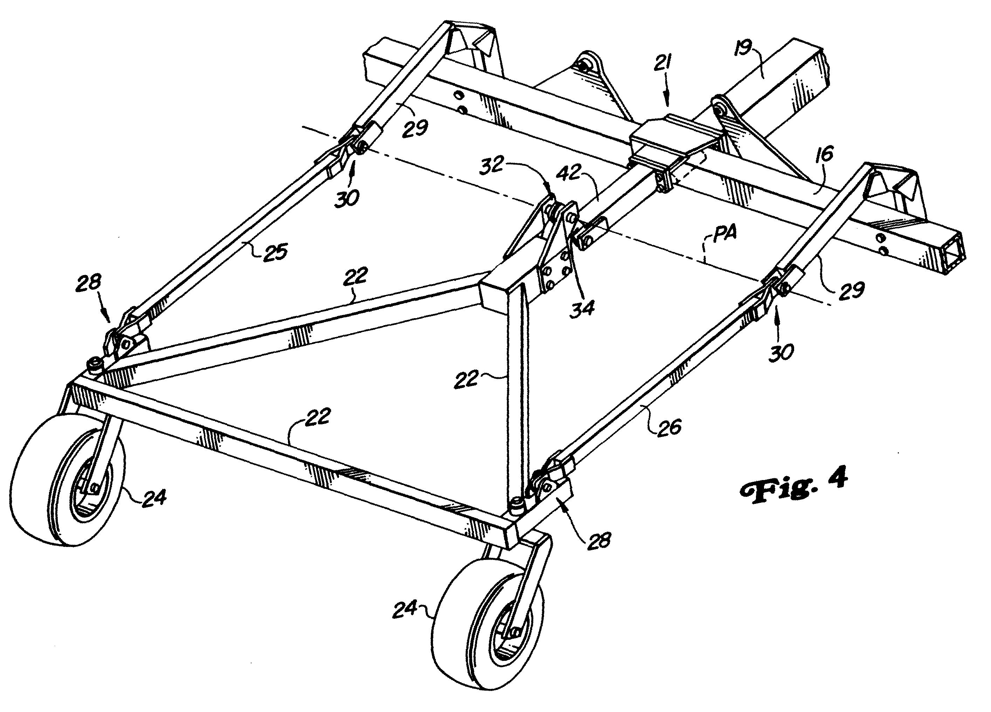

Wie aus Fig. 4 zu ersehen ist, weist der Transportwagen 10 einen im wesentlichen dreieckförmigen Grundrahmen 22 auf, an dessen die Hypotenuse bildenden und quer verlaufenden rückwärtigen Rahmenteil bzw. an jeweils endseitig sich von diesem Rahmenteil nach vorne erstreckenden Rahmenschenkeln zwei Pendelräder 24 angeschlossen sind. An diesen Rahmenschenkeln sind außerdem eine erste und eine zweite sich nach vorne erstreckende Zugstange 25 und 26 über Zapfengelenke 28 angeschlossen. An ihren frontseitigen Enden können die Zugstangen 25 und 26 über Kugelgelenke 30 an Ausleger 29 angeschlossen werden, die mit dem Werkzeugträger 16 verbunden sind und sich von diesem aus nach rückwärts erstrecken. Der Abstand der beiden Zugstangen zueinander entspricht in etwa der Spurweite. Auf diese Weise lassen die Anschlüsse der Zugstangen relative Höhenbewegungen zwischen Werkzeugträger und Transportwagen zu.

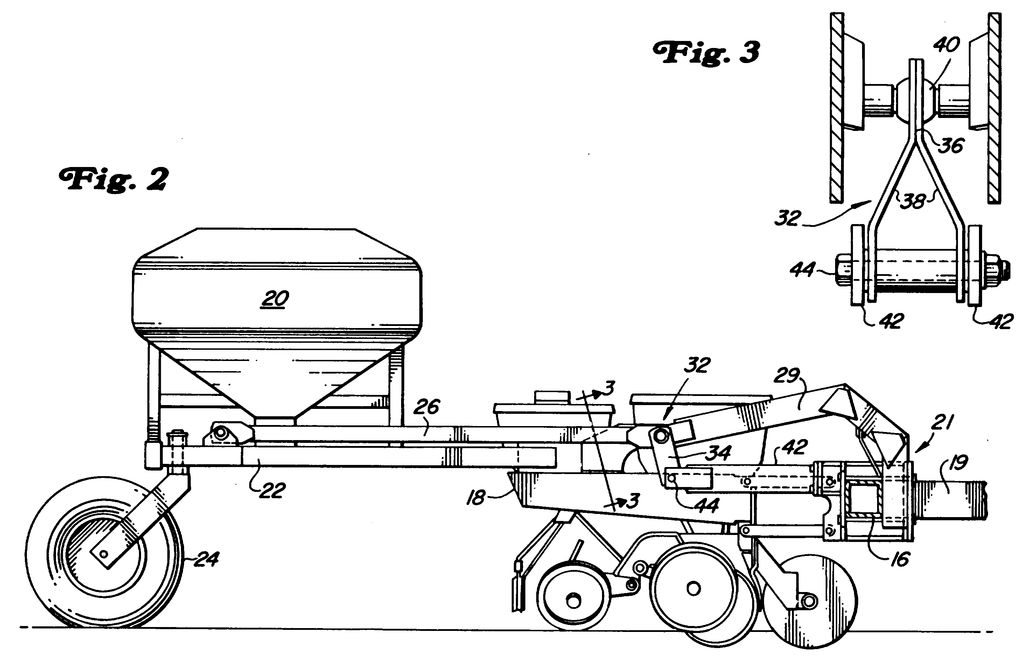

An der Spitze des dreieckförmigen Grundrahmens 22 und damit mittig zwischen den beiden Zugstangen 25 und 26 ist eine Zentralkupplung 32 vorgesehen. Sie ist als "Schwimm- oder Pufferkupplung" ausgebildet, dient zur Verbindung des Transportwagens 10 mit dem Querträger 16 und ist durch ein Gestänge 34 geprägt. Dieses ist, wie am besten aus Fig. 3 zu ersehen ist, umgekehrt Y-förmig ausgebildetes und weisteinen nach oben gerichteten Schaftteil 36 und zwei sich von diesem aus nach unten spreizende Schenkelteile 38 auf. Der Schaftteil 36 ist über ein Kugelgelenk 40 an den Grundrahmen 22 angeschlossen, wozu dieser an seiner Spitze mit einem in Fahrtrichtung nach vorne zeigenden kurzen Tragteil versehen ist, an dessen vorderem Ende zwei nach oben weisende Laschen angeschraubt sind. Diese nehmen an ihren oberen Enden das Kugelgelenk 40 mit dem Schaftteil 36 auf. Unterhalb des Kugelgelenkes 40 sind die unteren Enden der beiden Schenkelteile 38 über einen quer verlaufenden Zapfen 44 an einen Ausleger 42 vertikal schwenkbar angeschlossen, der mit dem Werkzeugträger 16 fest verbunden ist und sich von diesem aus nach rückwärts erstreckt. Die Kugelgelenke 30 der beiden Zugstangen 25 und 26 und das Kugelgelenk 40 der Zentralkupplung 32 liegen auf gleicher Höhe auf einer gedachten Linie PA, während der Zapfen 44 tiefer liegt. Die Linie PA entspricht einer Schwenkachse und verläuft parallel zu dem Werkzeugträger 16 und damit senkrecht zur Fahrtrichtung.

Die Zuordnung von Zentralkupplung 32 und den beiden äußeren Zugstangen 25 und 26 ist derart, daß das Y-förmige Gestänge niemals seine Strecklage einnehmen kann. Es kann damit keine Zug- oder Druckkräfte übertragen. Diese werden ausschließlich von den Zugstangen 25 und 26 übertragen, die zusätzlich dazu dienen, daß der Transportwagen 10 zu dem Ausleger 42 bzw. zu dem Werkzeugträger 16 ausgerichtet bleibt. Die Zentralkupplung 32 überträgt vertikale Kräfte, d. h. Gewichtsanteile von dem Transportwagen auf den Werkzeugträger, da sich das vordere Ende des Grundrahmens 22 über das umgekehrt Y-förmige Gestänge auf den Ausleger 42 des Werkzeugträgers 16 abstützt. Zusätzlich nimmt die Zentralkupplung Seitenkräfte auf und verhindert somit, daß der Transportwagen 10 seitlich ausbrechen kann. Durch die besondere Anordnung des Y-förmigen Gestänges kann sich aber die Zentralkupplung in Grenzen in- und auseinander schieben, so daß sich der Transportwagen auf den Werkzeugträger zu und von diesem fort bewegen läßt. Dies wird insbesondere bei Arbeiten auf unebenem Gelände genutzt. Trifft beispielsweise der linke Bereich des Werkzeugträgers auf eine Bodenerhebung und wird dadurch angehoben, so wird die linke Seite des Transportwagens etwas nach vorne gezogen und der horizontale Abstand zwischen der linken Wagenseite und dem Werkzeugträger entsprechend verkürzt. Die Zentralkupplung folgt dieser Bewegung, indem sie sich etwas zusammenschiebt. Das Anschlußgestänge verdreht sich nicht und die Räder 24 des Transportwagens bleiben in Bodenberührung und in der Spur des vorherlaufenden Werkzeugträgers und / oder in der des ziehenden Traktors.

## Patentansprüche

1. Sich auf Pendelrädern (24) auf dem Boden abstützende Einheit mit einem Rahmen (22), der über eine Zentralkupplung (32) und eine erste und eine zweite Zugstange (25, 26) an einen Querträger (16) anschließbar ist, wobei die erste und die zweite Zugstange (25, 26) sich für eine Verbindung mit dem Querträger (16) nach vorne erstrecken und an dem Rahmen (22) angelenkt sind, dadurch gekennzeichnet, daß die Zentralkupplung (32) ein Gestänge (34) aufweist, über das der Rahmen (22) an den Querträger (16) anschließbar ist, wobei sich die Kraftangriffslinien der Zugstangen (25, 26) und des Gestänges (34) nicht in derselben Richtung erstrecken, so daß das Gestänge (34) zu keiner Zeit eine Strecklage einnehmen kann, eine Bewegung des Rahmens (22) auf den Querträger (16) zu und von diesem fort zulässt und aufgrund seiner Form und der Zuordnung der Zentralkupplung (32) zu den beiden äußeren Zugstangen (25, 26) in der Lage ist, vertikale Lasten zu übertragen, nicht aber Zug- und Drucklasten.

2. Einheit nach Anspruch 1, dadurch gekennzeichnet, daß das gestänge (34) vertikal schwenkbar und zwischen der ersten und zweiten Zugstange (25, 26) vorgesehen ist.

3. Einheit nach Anspruch 1 und 2, dadurch gekennzeichnet, daß der Rahmen (22) mittig oder etwa mittig zwischen den beiden Zugstangen (25, 26) mit einem nach vorne weisenden Tragteil versehen ist, an dem das Gestänge (34) vertikal schwenkbar angeschlossen ist.

4. Als Transportwagen (10) ausgebildete Einheit nach Anspruch 1, dadurch gekennzeichnet, daß die Pendelräder (24) sich im Bereich des rückwärtigen Rahmenendes befinden.

5. Einheit nach einem oder mehreren der vorherigen Ansprüche, dadurch gekennzeichnet, daß das Gestänge (34) über ein Kugelgelenk (40) an den Tragteil des Rahmens (22) anschließbar ist.

6. Einheit nach einem oder mehreren der vorherigen Ansprüche, dadurch gekennzeichnet, daß das Gestänge (34) umgekehrt Y-förmig mit einem nach oben weisenden Schaftteil (36), der über das Kugelgelenk (40) an den Rahmen (22) anschließbar ist, und mit zwei nach unten weisenden Schenkelteilen (38) ausgebildet ist, die über mindestens einen Zapfen (44) an den Querträger (16) anschließbar sind.

7. Einheit nach einem oder mehreren der vorherigen Ansprüche, dadurch gekennzeichnet, daß die Zugstangen (25, 26) vertikal schwenkbar an dem Rahmen (22) des Transportwagens (10) angeschlossen und über je ein Kugelgelenk (30) an den Querträger (16) anschließbar sind.

8. Einheit nach Anspruch 5, dadurch gekennzeichnet, daß das Kugelgelenk (40) am Gestängen und die Kugelgelenke (30) der Zugstangen (25, 26) auf einer gemeinsamen quer zur Fahrtrichtung verlaufenden Schwenkachse (PA) angeordnet sind.

9. An einen Werkzeugträger (16) für landwirtschaftliche Geräte anschließbare Einheit nach Anspruch 1 mit einem Behälter (20) für Gut, das über die landwirtschaftlichen Geräte austragbar ist, gekennzeichnet durch ein oder mehrere Merkmale der Ansprüche 2 bis 8.

## Claims

1. A unit supported on the ground on castors (24), with a frame (22) which can be attached to a transverse beam (16) by a central coupling (32) and first and second drawbars (25, 26), wherein the first and second drawbars (25, 26) extend forwards for attachment to the transverse beam (16) and are pivoted on the frame (22), characterized in that the central coupling (32) comprises a link (34), through which the frame (22) can be attached to the transverse beam (16), wherein the lines of action of forces of the drawbars (25, 26) and of the link (34) do not extend in the same direction, so that the link (34) can at no time assume an extended position, allows movement of the frame (22) towards and away from the transverse beam (16) and is able, on account of its shape and the relationship of the central coupling (32) to the two outer drawbars (25, 26), to transmit vertical loads but not loads in tension and compression.

2. A unit according to claim 1, characterized in that the link (34) is provided between the first and second drawbars (25, 26), able to pivot vertically.

3. A unit according to claims 1 and 2, characterized in that the frame (22) is provided with a forwards extending support part centrally or approximately centrally between the two drawbars (25, 26), to which part the link (34) is vertically pivotally attached.

4. A unit according to claim 1 in the form of a transport waggon (10), characterized in that the castors (24) are located in the region of the rear end of the frame.

5. A unit according to one or more of the preceding claims, characterized in that the link (34) can be attached to the support part of the frame (22) by a ball joint (40).

6. A unit according to one or more of the preceding claims, characterized in that the link (34) is of inverted Y shape, with an upwardly pointing shank part (36), which can be attached to the frame by the ball joint (40), and with two downwardly pointing arm parts (38) which can be attached to the transverse beam (16) by at least one pin (44).

7. A unit according to one or more of the preceding claims, characterized in that the drawbars (25, 26) are vertically pivotally attached to the frame (22) of the transport waggon (10) and can each be attached to the transverse beam (16) by a ball joint (30).

8. A unit according to claim 5, characterized in that the ball joint (40) on the link and the ball joints (30) of the drawbars (25, 26) are disposed on a common pivotal axis (PA) running transversely to the direction of travel.

9. A unit according to claim 1 which can be attached to a tool beam (16) for agricultural implements, with a container for material, which can be distributed by the agricultural implement, characterized by one or more features of claims 2 to 8.

## Revendications

1. Unité prenant appui au sol au moyen de roues pivotantes (24) et comportant un cadre (22) qui peut être raccordé à un support transversal (16) par l'intermédiaire d'un attelage central (32) et de première et seconde barres de traction (25,26), les première et seconde barres de traction (25,26) s'étendant vers l'avant pour une liaison avec le support transversal (16) et étant articulées sur le cadre (22), caractérisée en ce que l'attelage central (32) comporte une tringlerie (34) au moyen de laquelle le cadre (22) peut être raccordé au support transversal (16), auquel cas les lignes d'action de force des barres de traction (25,26) et de la tringlerie (34) ne s'étendent pas dans la même direction de sorte que la tringlerie (34) ne peut prendre à aucun moment une position désirée, permet un déplacement du cadre (22) sur le support transversal (16) qui rapproche le cadre de ce support ou l'en écarte, et, en raison de sa forme et de l'association de l'attelage (32) aux deux barres de traction (25,26), est à même de transmettre des charges verticales, mais pas des charges de traction et de compression.

2. Unité selon la revendication 1, caractérisée en ce que la tringlerie (34) peut pivoter verticalement et est prévue entre les première et seconde barres de traction (25,26).

3. Unité selon les revendications 1 et 2, caractérisée en ce que le cadre (22) comporte en position centrale ou approximativement en position centrale entre les deux barres de traction (25,26), une partie de support, qui est dirigée vers l'avant et à laquelle la tringlerie (34) est raccordée de manière à pouvoir pivoter verticalement.

4. Unité agencée en tant que chariot de transport (10) selon la revendication 1, caractérisée en ce que les roues pivotantes (24) sont situées au voisinage de l'extrémité arrière du cadre.

5. Unité selon une ou plusieurs des revendications précédentes, caractérisée en ce que la tringlerie (34) peut être raccordée à la partie de support du cadre (22) par l'intermédiaire d'un joint sphérique (40).

6. Unité selon une ou plusieurs des revendications précédentes, caractérisée en ce que la tringlerie (34) est agencée en forme de Y retourné comprenant un élément d'arbre (36), qui est dirigé vers le haut et peut être raccordé au cadre (22) par l'intermédiaire du joint sphérique (40), et deux éléments formant branches (38), qui sont dirigés vers le bas et qui peuvent être raccordés au support transversal (16) par l'intermédiaire d'une goupille (44).

7. Unité selon une ou plusieurs des revendications précédentes, caractérisée en ce que les barres de traction (25,26) sont raccordées de manière à pouvoir pivoter verticalement sur le cadre (22) du chariot de transfert (10) et peuvent être raccordées au support transversal (16) par l'intermédiaire d'un joint sphérique respectif (30).

8. Unité selon la revendication 5, caractérisée en ce que le joint sphérique (40) est disposé sur la tringlerie et les joints sphériques (30) des barres de traction (25,26) sont disposés sur un axe commun de pivotement (PA), qui s'étend transversalement par rapport à la direction de déplacement.

9. Unité pouvant être raccordée à un porte-outil (16) pour des machines agricoles selon la revendication 1, comportant un récipient (20) pour la matière, qui peut être prélevée par l'intermédiaire des machines agricoles, caractérisée par une ou plusieurs caractéristiques des revendications 2 à 8.
